(19) Europäisches Patentamt
European Patent Office
Office européen des brevets

(11) **EP 3 637 147 B1**

(12) **EUROPEAN PATENT SPECIFICATION**

(45) Date of publication and mention
of the grant of the patent:
**13.12.2023   Bulletin 2023/50**

(21) Application number: **17919344.6**

(22) Date of filing: **27.10.2017**

(51) International Patent Classification (IPC):
**G01T 1/20** (2006.01)        **G01T 7/00** (2006.01)

(52) Cooperative Patent Classification (CPC):
**G01T 1/40; G01T 1/208;** Y02E 30/30

(86) International application number:
**PCT/CN2017/108116**

(87) International publication number:
**WO 2019/019451 (31.01.2019 Gazette 2019/05)**

(54) **GAIN CORRECTION APPARATUS AND METHOD FOR SCINTILLATION DETECTOR**

VERSTÄRKUNGSKORREKTURVORRICHTUNG UND -VERFAHREN FÜR EINEN
SZINTILLATIONSDETEKTOR

APPAREIL ET PROCÉDÉ DE CORRECTION DE GAIN POUR DÉTECTEUR À SCINTILLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **25.07.2017   CN 201710614096**

(43) Date of publication of application:
**15.04.2020   Bulletin 2020/16**

(73) Proprietor: **Raycan Technology Co., Ltd. (Suzhou)
Suzhou New District
Suzhou, Jiangsu 215163 (CN)**

(72) Inventors:
• **JIANG, Hao
  Suzhou, Jiangsu 215163 (CN)**
• **XING, Mingjun
  Suzhou, Jiangsu 215163 (CN)**
• **ZHU, Yuzhen
  Suzhou, Jiangsu 215163 (CN)**

• **XIE, Qingguo
  Suzhou, Jiangsu 215163 (CN)**

(74) Representative: **Lavoix
Bayerstraße 83
80335 München (DE)**

(56) References cited:
**CN-A- 101 040 567        CN-A- 101 210 970
CN-A- 103 424 768        CN-A- 107 247 284
CN-U- 207 020 320        KR-A- 20150 025 100
US-A1- 2011 031 405**

• **Marco Ramilli ET AL: "Silicon Photomultipliers:
Characterization and Applications" In:
"Photodetectors", 23 March 2012 (2012-03-23),
InTech, XP55697073, ISBN: 978-953-51-0358-5
DOI: 10.5772/36455, * equations 3, 4; pages 80-81;
figures 2, 3; table 1 ***

## Description

## Technical Field

The present invention relates to a signal correction apparatus and method in the field of nuclear medical imaging and in the field of ionizing radiation measurement, and particularly relates to a gain correction apparatus and method for a scintillation detector.

## Background

Scintillation detectors are widely used in the fields of nuclear medical imaging and ionizing radiation measurement, and serve as core devices for realizing imaging or radiation measurement. The scintillation detector comprises a scintillation crystal and a photoelectric device that are coupled to each other, the scintillation crystal converts ionizing radiation rays (including X ray, gamma photon, neutron, $\alpha$ photon, $\beta$ photon, etc.) into optical signal, the photoelectric device converts the optical signal into electric signal, and the electric signal is processed by a corresponding electronic design to obtain information of corresponding arrival time, arrival position, energy of gamma photon, etc.. Currently, frequently-used scintillation crystals include sodium iodide (NaI) crystal, yttrium lutetium silicate (LYSO) crystal, lutetium silicate (LSO) crystal, yttrium silicate (YSO) crystal and cesium iodide (CsI) crystal, and frequently-used photoelectric devices include avalanche photodiode (APD), photomultiplier tube (PMT) and newly-developed silicon photomultiplier (SiPM).

Because the scintillation detector is a core device for realizing imaging or radiation measurement, the gain parameter thereof would directly influence the accuracy of radiation measurement. However, light yield (referring to the number of photons converted from a unit energy of ionizing ray absorbed by a scintillation crystal) of individual scintillation crystals have differences, and such differences would cause gain variation of scintillation detectors, especially for scintillation detectors that use a silicon photomultiplier as the photoelectric device and are extremely sensitive to temperature, with more than 56% difference of gains in the temperature range of -20°C to 50°C, which severely affects the accuracy of the system. Therefore, in practical use, the gain of the scintillation detector needs to be corrected.

Currently, the method for correcting the gain of a scintillation detector usually adds an amplifier at the back-end of the scintillation detector, uses multiple channels of analysis devices to measure the energy spectrum of the scintillation detector to acquire the position of the photoelectric peak of the test radioactive source, takes the position of the photoelectric peak as the gain of the scintillation detector, adjusts the gain of the amplifier to compensate for the influence of gain variation of the scintillation detector, thereby keeping the position of the photoelectric peak unchanged to realize gain correction.

Although the prior art, by adding an amplifier at the back-end of the scintillation detector, can perform secondary amplification on the outputted signal to realize gain correction, however, because scintillation detectors using a silicon photomultiplier has background noise signal with a relatively fixed amplitude, when the gain of the silicon photomultiplier decreases, part of the outputted signal would be drown in the background noise signal, and even if an amplifier is added at the back-end thereof, the signal-to-noise ratio would not be increased, and eventually loss of signal information is caused. Secondly, after the amplifier is used, a full energy spectrum of the calibration radioactive source needs to be measured, in order to acquire the position of the photoelectric peak for realizing calibration, and usually the amount of acquired data is no less than 5000 incidents, which causes the speed of system calibration to be slow and increases the hardware cost. Moreover, after the amplifier is used, the calibration measurement procedure needs to be repeated when the temperature changes, which lowers the calibration efficiency.

Document US 2011/031405 discloses a method for controlling the gain of a scintillation detector which includes using a reference radiation source and a photomultiplier tube and controlling the gain of the scintillation detector based on the reference radiation source. The controlling includes detecting change in the gain of the scintillation detector, determining an amount of the change in the gain, outputting a control signal to compensate the amount of the change in the gain, and stabilizing the gain against the reference radiation source based on the control signal.

Document Marco Ramilli et al. "Silicon Photomultipliers: Characterization and Applications", Photodetectors, 23 March 2012, InTech, XP 55697073 discloses a gain correction method for a scintillation detector per se known.

## Summary of the Invention

The objective of the present invention is to provide a gain correction apparatus according to claim 5 and method according to claim 1, for a scintillation detector in order to solve the problem that the scintillation detectors in the prior art have slow speed of gain correction, low efficiency of calibration and high cost.

In order to solve the above technical problem, the technical solution of the present invention provides a gain correction apparatus and method for a scintillation detector, as defined in the appended claims.

The gain correction apparatus and method for a scintillation detector provided by the present invention can directly perform gain correction at the scintillation detector, which solves the problem of information loss, and by using multiple comparators instead of multiple channels of analyzers, the requirements of measurement equipment for the calibration process are simplified, and the calibration speed is increased. In the meantime, the present invention establishes a mathematical model of the gain of the scintillation detector in relation to the temperature and voltage, so that the gain can be directly adjusted according to temperature, with no need for re-measuring, so the efficiency of gain correction is improved.

**Brief Description of the Drawings**

FIG. 1 is a schematic diagram of the energy spectrum sections of the gain correction method for a scintillation detector according to an embodiment of the present invention;
FIG. 2 is a schematic diagram of the gain-temperature relation of the gain correction method for a scintillation detector according to an embodiment of the present invention;
FIG. 3 is a schematic diagram of the correction process of the gain correction method for a scintillation detector according to a preferred embodiment of the present invention;
FIG. 4 is a system schematic diagram of the gain correction apparatus for a scintillation detector according to an embodiment of the present invention;
FIG. 5 is a schematic diagram of the arrangement of multiple comparators of the gain correction apparatus for a scintillation detector according to an embodiment of the present invention.

**Detailed Description of Embodiments**

Hereinafter, the present invention is further described in conjunction with specific embodiments. It should be understood, the following embodiments are only for illustrating the present invention, and are not restrictive to the scope of the present invention as defined by the appended claims.

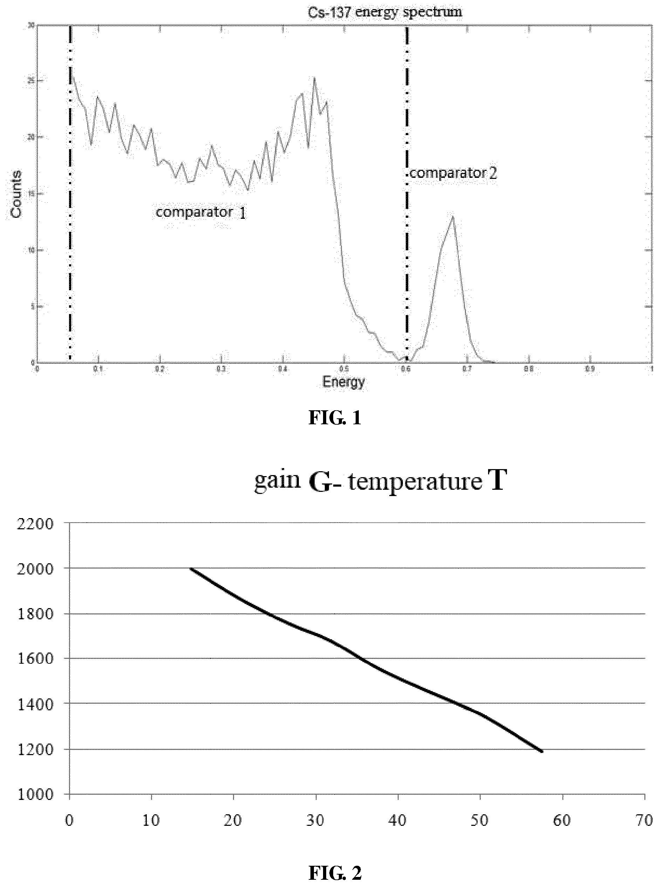

The energy spectrum in the present invention refers to an energy distribution histogram depicted in energy sections by using the information of energy and counts of the ionizing radiation rays acquired by the scintillation detector. Each type of radioactive source emits ionizing radiation rays of several fixed ranges of energy, and therefore each type of radioactive source has a relatively fixed energy spectrum morphology. If the energy spectrum is divided into several energy sections by using n different energy thresholds $E_n$, the ratio of count rate of all the pulses in a unit time in each respective energy section is the energy channel count rate ratio, for example, the energy spectrum is divided into three energy sections by using 3 energy thresholds $E_1$, $E_2$, $E_3$, the interval of these three energy sections are $[E_1, E_2)$, $[E_2, E_3)$, $[E_3, +\infty)$, the count rates in these three energy sections are $CR_1$, $CR_2$, $CR_3$, so the energy channel count rate ratio thereof is $CR_1 : CR_2 : CR_3$. For a scintillation crystal with a certain size, its energy spectrum morphology for the same type of radioactive source is relatively fixed, the count rate ratio of the energy channels thereof is stable, therefore, the overall count rate ratio of the different energy sections is also stable. Based on the above principle, the count rate ratio of the different energy sections can be recorded by using any two comparators with different backward voltages and serves as a reference standard for calibration, and this ratio of different count rates is taken as the gain of the photoelectric device of the scintillation detector. Specifically, as shown in FIG. 1, the energy spectrum of Cs-137 is divided into two energy sections, as shown by the dot dash lines in the Figure, and according to the above principle, it can be determined that the gain of the photoelectric device of the scintillation detector is:

$$G = \mathrm{CountRate2} \,/\, \mathrm{CountRate1}$$

wherein, CountRate refers to the count rate recorded by the comparator of each of different channels, CountRate1 is the count rate of a 1st comparator with a lower energy threshold, CountRate2 is the count rate of a 2nd comparator with a higher energy threshold.

Further, FIG. 2 is a schematic diagram of the gain-temperature relation of a scintillation detector according to a preferred embodiment of the present invention. As known from FIG. 2, according to the actual measured results, the gain of the photoelectric device and the temperature has a first-order linear relation, and the gain also has a first-order linear relation with the voltage, therefore, the gain G, the temperature t and the voltage x satisfy the following equation:

$$G(x, t) = at + bx + c, \qquad (1)$$

wherein, **a** is a temperature parameter, **b** is a voltage parameter, **c** is a gain deviation constant which is not related to the voltage or the temperature, but depends on the property of the scintillation detector, such as optical loss caused by the coupling between the scintillation crystal and the photoelectric device.

Correction in a temperature range can be realized by obtaining **a, b, c** through the relation of the equation (1), particularly as follows:

First, when the temperature $t_0$ is fixed,

$$G(x, t_0) = k_2 x + p_2, \qquad (2)$$

wherein, $k_2 = b$, $p_2 = at_0 + c$;

Second, when the voltage $x_0$ is fixed,

$$G(x_0, t) = k_1 t + p_1, \qquad (3)$$

wherein, $k_1 = a$, $p_1 = bx_0 + c$;

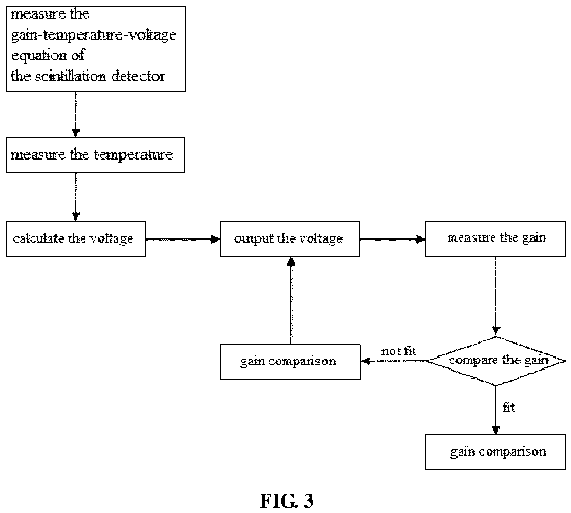

According to the above relation, in conjunction with FIG. 3, the steps for carrying out gain correction of the present invention are as follows:

A first step of determining the gain-temperature-voltage equation of a standard scintillation detector, in order to realize gain correction at different temperatures, and the first step specifically comprises:

S1: providing a standard scintillation detector, measuring a gain $G_0$ of the standard scintillation detector at a fixed temperature $T_0$ and a fixed voltage $X_0$, and using the gain $G_0$ of the standard scintillation detector as a target gain of another scintillation detector to be measured;

S2: measuring a gain $G_2$ of the standard scintillation detector at the fixed temperature $T_0$ and an adjusted voltage $X_2$, substituting the result into the above equation (2) to calculate the parameters $k_2$ and $p_2$;

S3: measuring a gain $G_1$ of the standard scintillation detector at the fixed voltage $X_0$ and an adjusted temperature $T_1$, substituting the result into the above equation (3) to calculate the parameters $k_1$ and $p_1$;

S4: substituting the parameters $k_1$, $k_2$, $p_1$ and $p_2$ into the above equation (1) to calculate the parameters **a, b, c** of the standard scintillation detector, so as to determine the gain-temperature-voltage equation of the standard scintillation detector to be

$$G(x, t) = at + bx + c, \qquad (1)$$

S5: when the target gain is $G_0$, determining a relation between the voltage **x** and the temperature t of the scintillation detector according to the above equation to be

$$x = (G_0 - at - c) / b.$$

A second step of measuring a gain difference between the scintillation detector to be measured and the standard scintillation detector under the sampling condition of the standard scintillation detector, and obtaining a voltage-temperature equation, under the condition of a fixed target gain, of the scintillation detector to be measured; herein, the sampling condition refers to the fixed temperature $T_0$ and the fixed voltage $X_0$ in the first step, and the second step specifically comprises:

S6: adjusting the temperature to $T_0$ and the voltage to $X_0$, and measuring a gain **G'** of the scintillation detector to be measured, the gain-temperature-voltage equation of the scintillation detector to be measured is

$$G(x, t) = at + bx + c + (G' - G_0);$$

S7: when the target gain is $G_0$, determining the voltage-temperature equation of the scintillation detector to be measured to be:

$$x = (-at - c + 2G_0 - G') / b.$$

A third step of, according to an actual measured gain difference between the scintillation detector to be measured and the standard scintillation detector and by using the voltage-temperature equation obtained in the sub-step S7 as a correction reference, calculating a corresponding correction voltage based on the temperature measured by a temperature sensor, controlling a high-voltage power source by using a single-chip microcomputer (MCU) to change the voltage according to the correction voltage, so as to realize gain correction of the scintillation detector to be measured.

For scintillation detectors with the same size and specs, the first step is only performed once, i.e. the sub-steps S1-S5 only need to be performed once; and for each of the other scintillation detectors to be measured, only the subsequent sub-steps S6-S7 need to be performed in sequence to obtain the voltage-temperature equation thereof under the target gain.

It should be noted that, in actual use, there may be a deviation between the actual measured gain and the target gain. After the voltage-temperature relation of the scintillation detector to be measured is determined by the sub-steps S6-S7, the MCU calculates the correction voltage and controls the high-voltage power source to output the corrected voltage to perform the calibration, then, the gain is continuously measured by the sub-step S6 and compared with the target gain by the sub-step S7, and if the corrected gain still does not fit the target gain, the sub-steps S6-S7 are repeated to perform the adjustment again, until the required range is reached; if the corrected gain fits the target gain, the gain correction of the next scintillation detector to be measured is automatically carried out.

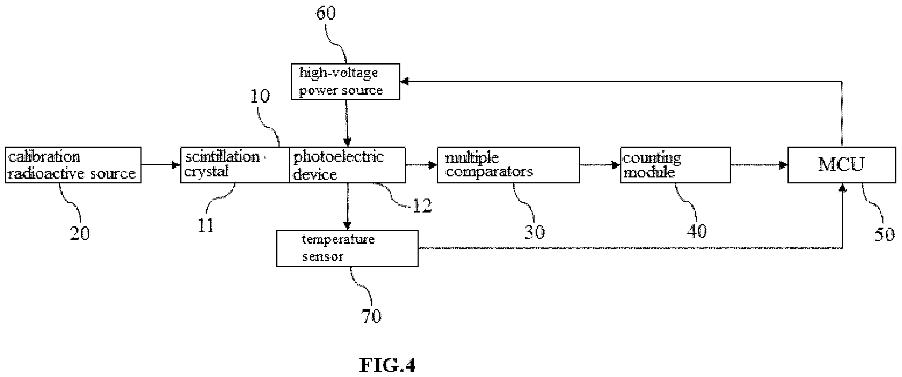

Therefore, according to the above principle, a system schematic diagram of the gain correction apparatus for a scintillation detector provided by the present invention is shown in FIG. 4. As known from FIG. 4, the gain correction apparatus for a scintillation detector 10 of the present invention comprises a calibration radioactive source 20, multiple comparators 30, a counting module 40, a single-chip microcomputer (MCU) 50, a high-voltage power source 60 and a temperature sensor 70, wherein, the scintillation detector 10 comprises a scintillation crystal 11 and a photoelectric device 12 that are coupled to each other; the calibration radioactive source 20 is a single-energy radioactive source, such as Cs-137, and the calibration radioactive source 20 emits ionizing radiation rays, such as X rays, gamma photons, neutrons, $\alpha$ photons, $\beta$ photons, etc.; the scintillation crystal 11 receives the ionizing radiation rays emitted from the calibration radioactive source 20 and coverts the ionizing radiation rays into visible light, the photoelectric device 12 coupled to the scintillation crystal 11 received the visible light and converts the visible light into analogue voltage signals; the multiple comparators 30 are communicated to the photoelectric device 12 and receive the analogue voltage signals from the photoelectric device 12, and the multiple comparators 30 convert the analogue voltage signals into digital pulse signals and send the digital pulse signals to the counting module 40; the counting module 40 is communicated to the multiple comparators 30 and receives the digital pulse signals, and the counting module 40 measures the counts of the digital pulse signals sent by the multiple comparators 30 in a unit time, i.e. the count rates, and then sends the count rates to the MCU 50; the temperature sensor 70 is provided on a surface of the photoelectric device 12 for accurately measuring a real-time temperature of the surface of the photoelectric device 12, and the temperature sensor 70 sends the measured real-time temperature to the MCU 50; the MCU 50 calculates a target gain according to the count rates of the respective comparators 30 sent by the counting module 40 and calculates a correction voltage according to the voltage-temperature equation and the measured real-time temperature, and after the correction voltage is determined by the MCU 50, the MCU 50 sends a regulating command to the high-voltage power source 60 to adjust the voltage to a required value for calibration, so as to complete the calibration, thereby controlling the process of calibration operation.

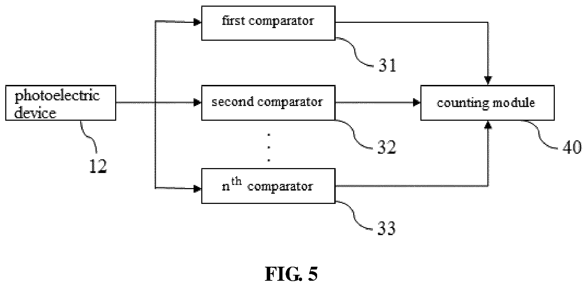

More specifically, FIG. 5 is a schematic diagram of the arrangement of multiple comparators of the gain correction apparatus for a scintillation detector according to an embodiment of the present invention, wherein, there are **n** channels of comparators, the photoelectric device 12 is respectively communicated to each of the multiple comparators 30, i.e. the photoelectric device 12 is respectively communicated to a first comparator 31, a second comparator 32, ... and an **n**th comparator, and the first comparator 31, the second comparator 32, ... and the **n**th comparator are respectively communicated to the counting module 40. Because the energy spectrum is divided into multiple energy sections by **n** different energy thresholds, each comparator converts the analogue voltage signal in a corresponding energy section into digital pulse signal, the counting module 40 simultaneously measures the counts of the digital pulse signals sent by every comparator in a unit time and sends the count rates of every channel to the MCU 50, and the MCU 50 determines the energy channel count rate ratio, thereby determining the target gain.

According to a preferred embodiment of the present invention, the multiple comparators 30 only use two comparators 31, 32 with different backward voltages, the counting module 40 records the count rate ratio of different energy sections as a reference standard for calibration, and the MCU takes this ratio of different count rates as the gain of the scintillation detector for carrying out correction.

It should be noted that, because the ionizing radiation rays emitted from the calibration radioactive source 20 is prone to reflection and refraction by surrounding objects, which would affect the morphology of the energy spectrum detected by the scintillation crystal, therefore, any object with a large density, such as a metal plate, blocking between the calibration radioactive source 20 and the scintillation crystal 11 should be avoided. Meanwhile, it should also be noted that, the relative position between the calibration radioactive source 20 and the scintillation crystal 11 should be kept constant, and when calibrating the same type of scintillation detectors, the relative position between the calibration radioactive source 20 and the scintillation crystal 11 should be kept consistent, otherwise, a calibration error may arise.

According to an embodiment of the present invention, the calibration radioactive source 20 adopts a single-energy radioactive source, such as Cs-137, Co-60 or Eu-152, not necessarily being Cs-137, and because the energy spectrum of a single-energy radioactive source is relatively simple, a relatively stable channel count rate ratio can be obtained. It should be understood, the calibration radioactive source of the present invention is not limited to a single-energy radioactive source, but can be any other type of radioactive source.

According to a preferred embodiment of the present invention, the photoelectric device 12 adopts a silicon photomultiplier (SiPM), and the temperature sensor 70 is mounted to be in close contact with the SiPM; the temperature sensor 70 may also be mounted on a housing of the photoelectric device, on a PCB board of a bottom surface of the SiPM, or on a side surface of the SiPM.

The gain correction apparatus and method for a scintillation detector provided by the present invention can realize gain correction directly at the scintillation detector, ensure the signal-to-noise ratio of the scintillation detector to be constant under the conditions of different temperatures and scintillation crystals with different performances, and thus keep the energy detection lower-limit unchanged after the calibration of the scintillation detector, thereby maintaining the integrity of information. The present invention uses two or more channels of comparators and a counting module instead of a multi-channel analyzer, so there is no need to measure the entire energy spectrum, in order to measure the gain, and only 1000 incidents are needed for measuring the accurate gain, the amount of measured incidents is reduced by 80% in comparison with obtaining the gain by an energy spectrum method, and the calibration speed is faster. Meanwhile, the present invention establishes a mathematical model of the gain of the photoelectric device in relation to the temperature and voltage, so that only the data at two temperatures needs to be measured, in order to realize the correction in a full temperature range, and the calibration efficiency is higher.

The above-described are just preferred embodiments of the present invention, and are not intended for limiting the scope of the present invention which is solely defined by the appended claims. The above embodiments of the present invention may have all kinds of variations, for example, the model established for the gain, temperature and voltage in the present invention may also be fitted by using a second-order or higher-order function.

**Claims**

1. A gain correction method for a scintillation detector (10), **characterized in that**, a ratio between count rates of different energy sections of a measured energy spectrum divided into several energy sections using n different energy thresholds En is determined to be gain **G** of a scintillation detector (10), and is correlated to temperature **t** and voltage **x** of the scintillation detector (10) by a gain-temperature-voltage equation **G(x, t) = at + bx + c,** where parameters **a, b, c** are constants; the gain correction method comprises the following steps:

   a first step of determining the gain-temperature-voltage equation of a standard scintillation detector, specifically comprising:

   sub-step 51: providing a standard scintillation detector, measuring a gain $G_0$ of the standard scintillation detector at a fixed temperature $T_0$ and a fixed voltage $X_0$, and using the gain $G_0$ of the standard scintillation detector as a target gain of a scintillation detector (10) to be measured;
   sub-step S2: measuring a gain $G_2$ of the standard scintillation detector at the fixed temperature $T_0$ and an adjusted voltage $X_2$, substituting the result into the gain-temperature-voltage equation to calculate parameters $k_2$ and $p_2$, where $k_2 = b$, $p_2 = at_0 + c$;
   sub-step S3: measuring a gain $G_1$ of the standard scintillation detector at the fixed voltage $X_0$ and an adjusted temperature $T_1$, substituting the result into the gain-temperature-voltage equation to calculate parameters $k_1$ and $p_1$, where $k_1 = a$, $p_1 = bx_0 + c$;

sub-step S4: substituting the parameters $k_1$, $k_2$, $p_1$ and $p_2$ into the gain-temperature-voltage equation to calculate the parameters **a, b, c,** so as to determine the gain-temperature-voltage equation of the standard scintillation detector to be

$$G(x, t) = at + bx + c,$$

sub-step S5: when the target gain is $G_0$, determining a relation between the voltage **x** and the temperature **t** of the scintillation detector (10) according to the gain-temperature-voltage equation to be

$$x = (G_0 - at - c) / b;$$

a second step of measuring a gain difference between the scintillation detector (10) to be measured and the standard scintillation detector and obtaining a voltage-temperature equation, under a condition of the target gain, of the scintillation detector (10) to be measured;
a third step of using the voltage-temperature equation obtained in the second step as a correction reference, calculating a corresponding correction voltage according to a measured temperature of the scintillation detector (10) to be measured and changing the voltage of the scintillation detector (10) according to the correction voltage, so as to realize gain correction of the scintillation detector (10) to be measured.

2. The gain correction method according to Claim **1, characterized in that**, the second step specifically comprises:

sub-step S6: adjusting the temperature to $T_0$ and the voltage to $X_0$, and measuring a gain **G'** of the scintillation detector (10) to be measured, the gain-temperature-voltage equation of the scintillation detector (10) to be measured is

$$G(x, t) = at + bx + c + (G' - G_0);$$

sub-step S7: when the target gain is $G_0$, determining the voltage-temperature equation of the scintillation detector (10) to be measured to be:

$$x = (-at - c + 2G_0 - G') / b.$$

3. The gain correction method according to Claim 1, **characterized in that**, the measured temperature of the scintillation detector (10) to be measured is acquired by a temperature sensor (70), and the corresponding correction voltage is calculated by a single-chip microcomputer (50).

4. The gain correction method according to Claim 1, **characterized in that**, the first step is only performed once for all scintillation detectors (10) with the same size and specs, and the second step is performed for each of the other scintillation detectors (10) to be measured, so as to obtain the voltage-temperature equation under the target gain.

5. A gain correction apparatus for a scintillation detector (10), the scintillation detector (10) comprising a scintillation crystal (11) and a photoelectric device (12) that are coupled to each other, **characterized in that**, the gain correction apparatus comprises:

a calibration radioactive source (20), wherein the scintillation crystal (11) receives ionizing radiation rays emitted from the calibration radioactive source (20) and converts the ionizing radiation rays into visible light, and the photoelectric device (12) converts the visible light into analogue voltage signals;
at least two comparators (30), each of which is communicated to the photoelectric device (12) for converting the analogue voltage signals of different energy bands into digital pulse signals;
a counting module (40), communicated to each of the comparators (30) for receiving the digital pulse signals sent by each of the comparators (30), and measuring the counting rates of the digital pulse signals;
a temperature sensor (70), provided on an exterior of the photoelectric device (12) for measuring temperature;
a single-chip microcomputer (50), respectively communicated to the counting module (40) for receiving the counting rates so as to calculate a ratio between count rates of different energy sections and to the temperature sensor (70) for receiving the measured temperature, and calculating a correction voltage; and
a high-voltage power source (60), respectively connected to the single-chip microcomputer (50) for receiving the correction voltage and to the photoelectric device (12) for carrying out gain correction of the photoelectric device (12) according to the correction voltage,
wherein, the ratio between count rates of different energy sections of a measured energy spectrum divided into several energy sections using n different energy thresholds En is determined to be gain **G** of the scintillation detector (10), and is correlated to temperature **t** and voltage **x** of the scintillation detector (10) by a gain-temperature-voltage equation **G(x, t) = at + bx + c,** where parameters **a, b, c** are constants,
wherein, the single-chip microcomputer (50) is configured to calculate the correction voltage by the following steps:

a first step of determining the gain-temperature-voltage equation of a standard scintillation detector, specifically comprising:

sub-step S1: measuring a gain $G_0$ of a standard scintillation detector at a fixed temperature $T_0$ and a fixed voltage $X_0$, and using the gain $G_0$ of the standard scintillation detector as a target gain of a scintillation detector (10) to be measured;
sub-step S2: measuring a gain $G_2$ of the standard scintillation detector at the fixed temperature $T_0$ and an adjusted voltage $X_2$, substituting the result into the gain-temperature-voltage equation to calculate parameters $k_2$ and $p_2$, where $k_2 = b, p_2 = at_0 + c$;
sub-step S3: measuring a gain $G_1$ of the standard scintillation detector at the fixed voltage $X_0$ and an adjusted temperature $T_1$, substituting the result into the gain-temperature-voltage equation to calculate parameters $k_1$ and $p_1$, where $k_1 = a, p_1 = bx_0 + c$;
sub-step S4: substituting the parameters $k_1, k_2, p_1$ and $p_2$ into the gain-temperature-voltage equation to calculate the parameters **a, b, c,** so as to determine the gain-temperature-voltage equation of the standard scintillation detector to be

$$G(x, t) = at + bx + c,$$

sub-step S5: when the target gain is $G_0$, determining a relation between the voltage **x** and the temperature **t** of the scintillation detector (10) according to the gain-temperature-voltage equation to be

$$x = (G_0 - at - c) / b;$$

a second step of measuring a gain difference between the scintillation detector (10) to be measured and the standard scintillation detector and obtaining a voltage-temperature equation, under a condition of the target gain, of the scintillation detector (10) to be measured;
a third step of using the voltage-temperature equation obtained in the second step as a correction reference, calculating a corresponding correction voltage according to a measured temperature of the scintillation detector (10) to be measured.

6. The gain correction apparatus according to Claim 5, **characterized in that**, the calibration radioactive source (20) is a single-energy radioactive source.

7. The gain correction apparatus according to Claim 6, **characterized in that**, the calibration radioactive source (20) adopts a radioactive element of Cs-137, Co-60 or Eu-152.

8. The gain correction apparatus according to Claim 5, **characterized in that**, the calibration radioactive source (20) and the scintillation crystal (11) are configured to have a constant distance there between when the same type of scintillation detectors are calibrated.

9. The gain correction apparatus according to Claim 5, **characterized in that**, two comparators (30) are provided and communicated to the photoelectric device (12) and the counting module (40).

10. The gain correction apparatus according to Claim 5, **characterized in that**, the photoelectric device (12) is a silicon photomultiplier.

**Patentansprüche**

1. Verstärkungskorrekturverfahren für einen Szintillationsdetektor (10), **dadurch gekennzeichnet, dass** ein Verhältnis zwischen Zählraten verschiedener Energieabschnitte eines gemessenen Energiespektrums, das unter Verwendung von n verschiedenen Energieschwellenwerten En in mehrere Energieabschnitte unterteilt ist, als Verstärkung **G** eines Szintillationsdetektors (10) bestimmt wird und mit Temperatur **t** und Spannung **x** des Szintillationsdetektors (10) durch eine Verstärkungs-Temperatur-Spannungs-Gleichung **G(x, t) = at + bx + c,** korreliert wird, wobei die Parameter **a, b, c** Konstanten sind; wobei das Verstärkungskorrekturverfahren die folgenden Schritte umfasst:

    einen ersten Schritt eines Bestimmens der Verstärkungs-Temperatur-Spannungs-Gleichung eines standardmäßigen Szintillationsdetektors, spezifisch umfassend:

    Teilschritt S1: Bereitstellen eines standardmäßigen Szintillationsdetektors, Messen einer Verstärkung $G_0$ des standardmäßigen Szintillationsdetektors bei einer festen Temperatur $T_0$ und einer festen Spannung $X_0$, und Verwenden der Verstärkung $G_0$ des standardmäßigen Szintillationsdetektors als eine Zielverstärkung eines zu messenden Szintillationsdetektors (10);
    Teilschritt S2: Messen einer Verstärkung $G_2$ des standardmäßigen Szintillationsdetektors bei der festen Temperatur $T_0$ und einer eingestellten Spannung $X_2$, Einsetzen des Resultats in die Verstärkungs-Temperatur-Spannungs-Gleichung, um die Parameter $k_2$ und $p_2$ zu berechnen, wobei $k_2 = b$, $p_2 = at_0 + c$;
    Teilschritt S3: Messen einer Verstärkung $G_1$ des standardmäßigen Szintillationsdetektors bei der festen Spannung $X_0$ und einer eingestellten Temperatur $T_1$, Einsetzen des Resultats in die Verstärkungs-Temperatur-Spannungs-Gleichung, um die Parameter $k_1$ und $p_1$ zu berechnen, wobei $k_1 = a$, $p_1 = bx_0 + c$;
    Teilschritt S4: Einsetzen der Parameter $k_1$, $k_2$, $p_1$ und $p_2$ in die Verstärkungs-Temperatur-Spannungs-Gleichung, um die Parameter **a, b, c** zu berechnen, um die Verstärkungs-Temperatur-Spannungs-Gleichung des standardmäßigen Szintillationsdetektors wie folgt zu bestimmen

$$G(x, t) = at + bx + c,$$

    Teilschritt S5: wenn die Zielverstärkung $G_0$ ist, Bestimmen einer Beziehung zwischen der Spannung **x** und der Temperatur **t** des Szintillationsdetektors (10) gemäß der Verstärkungs-Temperatur-Spannungs-Gleichung, wie folgt

$$x = (G_0 - at - c) / b;$$

    einen zweiten Schritt des Messens einer Verstärkungsdifferenz zwischen dem zu messenden Szintillationsdetektor (10) und dem standardmäßigen Szintillationsdetektor und eines Erlangens einer Spannungs-Temperatur-Gleichung unter einer Bedingung der Zielverstärkung des zu messenden Szintillationsdetektors (10);
    einen dritten Schritt eines Verwendens der im zweiten Schritt erhaltenen Spannungs-Temperatur-Gleichung als Korrekturreferenz, eines Berechnens einer entsprechenden Korrekturspannung gemäß einer gemessenen Temperatur des zu messenden Szintillationsdetektors (10) und eines Änderns der Spannung des Szintillationsdetektors (10) gemäß der Korrekturspannung, um eine Verstärkungskorrektur des zu messenden Szintillationsdetektors (10) zu realisieren.

2. Verstärkungskorrekturverfahren nach Anspruch 1, **dadurch gekennzeichnet, dass** der zweite Schritt spezifisch Folgendes umfasst:

    Teilschritt S6: Einstellen der Temperatur auf $T_0$ und der Spannung auf $X_0$, und Messen einer Verstärkung **G'** des zu messenden Szintillationsdetektors (10), wobei die Verstärkungs-Temperatur-Spannungs-Gleichung des zu messenden Szintillationsdetektors (10) wie folgt ist

$$G(x, t) = at + bx + c + (G' - G_0);$$

    Teilschritt S7: wenn die Zielverstärkung $G_0$ ist, Bestimmen der Spannungs-Temperatur-Gleichung des zu messenden Szintillationsdetektors (10) wie folgt:

$$x = (-at - c + 2G_0 - G') / b.$$

3. Verstärkungskorrekturverfahren nach Anspruch 1, **dadurch gekennzeichnet, dass** die gemessene Temperatur des zu messenden Szintillationsdetektors (10) von einem Temperatursensor (70) erfasst wird und die entsprechende Korrekturspannung von einem Ein-Chip-Mikrocomputer (50) berechnet wird.

4. Verstärkungskorrekturverfahren nach Anspruch 1, **dadurch gekennzeichnet, dass** der erste Schritt nur einmal für alle Szintillationsdetektoren (10) mit der gleichen Größe und den gleichen Spezifikationen ausgeführt wird, und der zweite Schritt für jeden der anderen zu messenden Szintillationsdetektoren (10) ausgeführt wird, um die Spannungs-Temperatur-Gleichung unter der Zielverstärkung zu erlangen.

5. Verstärkungskorrekturvorrichtung für einen Szintillationsdetektor (10), wobei der Szintillationsdetektor (10) einen Szintillationskristall (11) und eine photoelektrische Vorrichtung (12) umfasst, die miteinander gekoppelt sind, **dadurch gekennzeichnet, dass** die Verstärkungskorrekturvorrichtung Folgendes umfasst:

eine radioaktive Kalibrierungsquelle (20), wobei der Szintillationskristall (11) die von der radioaktiven Kalibrierungsquelle (20) emittierten ionisierenden Strahlen empfängt und die ionisierenden Strahlen in sichtbares Licht umwandelt, und die photoelektrische Vorrichtung (12) das sichtbare Licht in analoge Spannungssignale umwandelt;
mindestens zwei Komparatoren (30), wovon jeder mit der photoelektrischen Vorrichtung (12) verbunden ist, um die analogen Spannungssignale verschiedener Energiebänder in digitale Impulssignale umzuwandeln;
ein Zählmodul (40), das mit jedem der Komparatoren (30) verbunden ist, um die von jedem der Komparatoren (30) gesendeten digitalen Impulssignale zu empfangen und die Zählraten der digitalen Impulssignale zu messen;
einen Temperatursensor (70), der an der Außenseite der photoelektrischen Vorrichtung (12) zum Messen der Temperatur bereitgestellt ist;
einen Ein-Chip-Mikrocomputer (50), der jeweils mit dem Zählmodul (40) zum Empfangen der Zählraten verbunden ist, um ein Verhältnis zwischen den Zählraten verschiedener Energieabschnitte zu berechnen, und mit dem Temperatursensor (70) zum Empfangen der gemessenen Temperatur und zum Berechnen einer Korrekturspannung; und
eine Hochspannungsstromquelle (60), die jeweils mit dem Ein-Chip-Mikrocomputer (50) verbunden ist, um die Korrekturspannung zu empfangen, und mit der photoelektrischen Vorrichtung (12), um eine Verstärkungskorrektur der fotoelektrischen Vorrichtung (12) gemäß der Korrekturspannung auszuführen,
wobei das Verhältnis zwischen Zählraten verschiedener Energieabschnitte eines gemessenen Energiespektrums, das unter Verwendung von n verschiedenen Energieschwellenwerten En in mehrere Energieabschnitte unterteilt ist, als Verstärkung **G** eines Szintillationsdetektors (10) bestimmt wird und mit Temperatur **t** und Spannung **x** des Szintillationsdetektors (10) durch eine Verstärkungs-Temperatur-Spannungs-Gleichung **G(x, t) = at + bx + c,** korreliert wird, wobei die Parameter **a, b, c** Konstanten sind,
wobei der Ein-Chip-Mikrocomputer (50) konfiguriert ist, um die Korrekturspannung durch die folgenden Schritte zu berechnen:

einen ersten Schritt eines Bestimmens der Verstärkungs-Temperatur-Spannungs-Gleichung eines standardmäßigen Szintillationsdetektors, spezifisch umfassend:

Teilschritt S1: Messen einer Verstärkung $G_0$ eines standardmäßigen Szintillationsdetektors bei einer festen Temperatur $T_0$ und einer festen Spannung $X_0$, und Verwenden der Verstärkung $G_0$ des standardmäßigen Szintillationsdetektors als eine Zielverstärkung eines zu messenden Szintillationsdetektors (10);
Teilschritt S2: Messen einer Verstärkung $G_2$ des standardmäßigen Szintillationsdetektors bei der festen Temperatur $T_0$ und einer eingestellten Spannung $X_2$, Einsetzen des Resultats in die Verstärkungs-Temperatur-Spannungs-Gleichung, um die Parameter $k_2$ und $p_2$ zu berechnen, wobei $k_2 = b, p_2 = at_0 + c$;
Teilschritt S3: Messen einer Verstärkung $G_1$ des standardmäßigen Szintillationsdetektors bei der festen Spannung $X_0$ und einer eingestellten Temperatur $T_1$, Einsetzen des Resultats in die Verstärkungs-Temperatur-Spannungs-Gleichung, um die Parameter k1 und $p_1$ zu berechnen, wobei k1 = a, $p_1 = bx_0 + c$;
Teilschritt S4: Einsetzen der Parameter $k_1, k_1, p_1$ und $p_2$ in die Verstärkungs-Temperatur-Spannungs-Gleichung, um die Parameter **a, b, c** zu berechnen, um die Verstärkungs-Temperatur-Spannungs-Gleichung des standardmäßigen Szintillationsdetektors wie folgt zu bestimmen

$$G(x, t) = at + bx + c,$$

Teilschritt S5: wenn die Zielverstärkung $G_0$ ist, Bestimmen einer Beziehung zwischen der Spannung $x$ und der Temperatur $t$ des Szintillationsdetektors (10) gemäß der Verstärkungs-Temperatur-Spannungs-Gleichung, wie folgt

$$x = (G_0 - at - c) / b;$$

einen zweiten Schritt des Messens einer Verstärkungsdifferenz zwischen dem zu messenden Szintillationsdetektor (10) und dem standardmäßigen Szintillationsdetektor und eines Erlangens einer Spannungs-Temperatur-Gleichung unter einer Bedingung der Zielverstärkung des zu messenden Szintillationsdetektors (10);

einen dritten Schritt eines Verwendens der im zweiten Schritt erhaltenen Spannungs-Temperatur-Gleichung als Korrekturreferenz, eines Berechnens einer entsprechenden Korrekturspannung gemäß einer gemessenen Temperatur des zu messenden Szintillationsdetektors (10) zu realisieren.

6. Verstärkungskorrekturvorrichtung nach Anspruch 5, **dadurch gekennzeichnet, dass** die radioaktive Kalibrierungsquelle (20) eine radioaktive Ein-Energie-Quelle ist.

7. Verstärkungskorrekturvorrichtung nach Anspruch 6, **dadurch gekennzeichnet, dass** die radioaktive Kalibrierungsquelle (20) ein radioaktives Element aus Cs-137, Co-60 oder Eu-152 verwendet.

8. Verstärkungskorrekturvorrichtung nach Anspruch 5, **dadurch gekennzeichnet, dass** die radioaktive Kalibrierungsquelle (20) und der Szintillationskristall (11) konfiguriert sind, um einen konstanten Abstand zueinander aufzuweisen, wenn Szintillationsdetektoren desselben Typs kalibriert werden.

9. Verstärkungskorrekturvorrichtung nach Anspruch 5, **dadurch gekennzeichnet, dass** zwei Komparatoren (30) bereitgestellt sind, die mit der photoelektrischen Vorrichtung (12) und dem Zählmodul (40) verbunden sind.

10. Verstärkungskorrekturvorrichtung nach Anspruch 5, **dadurch gekennzeichnet, dass** die photoelektrische Vorrichtung (12) ein Silizium-Photomultiplier ist.

## Revendications

1. Procédé de correction de gain pour un détecteur à scintillation (10), **caractérisé en ce qu'**un rapport entre les taux de comptage de différentes sections d'énergie d'un spectre d'énergie mesuré divisé en plusieurs sections d'énergie en utilisant n seuils d'énergie différents En est déterminé comme étant le gain **G** d'un détecteur à scintillation (10), et est corrélé à la température **t** et à la tension **x** du détecteur à scintillation (10) par une équation gain-température-tension **G(x, t) = at + bx + c,** où les paramètres **a, b, c** sont des constantes ; le procédé de correction de gain comprend les étapes suivantes :

une première étape de détermination de l'équation gain-température-tension d'un détecteur à scintillation standard, comprenant spécifiquement :

sous-étape S1 : fourniture d'un détecteur à scintillation standard, mesure d'un gain $G_0$ du détecteur à scintillation standard à une température fixe $T_0$ et à une tension fixe $X_0$, et utilisation du gain $G_0$ du détecteur à scintillation standard comme gain cible d'un détecteur à scintillation (10) à mesurer ;
sous-étape S2 : mesure d'un gain $G_2$ du détecteur à scintillation standard à la température fixe $T_0$ et à une tension ajustée $X_2$, substitution du résultat dans l'équation gain-température-tension pour calculer les paramètres $k_2$ et $p_2$, où $k_2 = b$, $p_2 = at_0 + c$ ;
sous-étape S3 : mesure d'un gain $G_1$ du détecteur à scintillation standard à la tension fixe $X_0$ et à une température ajustée $T_1$, substitution du résultat dans l'équation gain-température-tension pour calculer les paramètres $k_1$ et $p_1$, où $k_1 = a$, $p_1 = bx_0 + c$ ;

sous-étape S4 : substitution des paramètres $k_1$, $k_2$, $p_1$ et $p_2$ dans l'équation gain-température-tension pour calculer les paramètres **a, b, c,** de manière à déterminer l'équation gain-température-tension du détecteur à scintillation étalon, à savoir

$$G(x, t) = at + bx + c,$$

sous-étape S5 : lorsque le gain cible est $G_0$, détermination d'une relation entre la tension **x** et la température **t** du détecteur à scintillation (10) selon l'équation gain-température-tension suivante

$$x = (G_0 - at - c) / b ;$$

une deuxième étape consistant à mesurer une différence de gain entre le détecteur à scintillation (10) à mesurer et le détecteur à scintillation standard et à obtenir une équation tension-température, sous condition du gain cible, du détecteur à scintillation (10) à mesurer ;

une troisième étape consistant à utiliser l'équation tension-température obtenue lors de la deuxième étape comme référence de correction, à calculer une tension de correction correspondante en fonction d'une température mesurée du détecteur à scintillation (10) à mesurer et à modifier la tension du détecteur à scintillation (10) en fonction de la tension de correction, de manière à réaliser une correction de gain du détecteur à scintillation (10) à mesurer.

2. Procédé de correction de gain selon la revendication 1, **caractérisé en ce que** la deuxième étape comprend spécifiquement :

sous-étape S6 : réglage de la température à $T_0$ et de la tension à $X_0$, et mesure d'un gain **G'** du détecteur à scintillation (10) à mesurer, l'équation gain-température-tension du détecteur à scintillation (10) à mesurer est la suivante

$$G(x, t) = at + bx + c + (G' - G_0) ;$$

sous-étape S7 : lorsque le gain cible est $G_0$, détermination de l'équation tension-température du détecteur à scintillation (10) à mesurer :

$$x = (-at - c + 2G_0 - G') / b.$$

3. Procédé de correction de gain selon la revendication 1, **caractérisé en ce que** la température mesurée du détecteur à scintillation (10) à mesurer est acquise par un capteur de température (70), et **en ce que** la tension de correction correspondante est calculée par un micro-ordinateur monopuce (50).

4. Procédé de correction de gain selon la revendication 1, **caractérisé en ce que** la première étape n'est réalisée qu'une seule fois pour tous les détecteurs à scintillation (10) ayant la même taille et les mêmes spécifications, et **en ce que** la deuxième étape est réalisée pour chacun des autres détecteurs à scintillation (10) à mesurer, de manière à obtenir l'équation tension-température avec le gain cible.

5. Appareil de correction de gain pour un détecteur à scintillation (10), le détecteur à scintillation (10) comprenant un cristal de scintillation (11) et un dispositif photoélectrique (12) qui sont couplés l'un à l'autre, **caractérisé en ce que** l'appareil de correction de gain comprend :

une source radioactive d'étalonnage (20), dans lequel le cristal de scintillation (11) reçoit des rayons de rayonnement ionisant émis par la source radioactive d'étalonnage (20) et convertit les rayons de rayonnement ionisant en lumière visible, et le dispositif photoélectrique (12) convertit la lumière visible en signaux de tension analogiques ;

au moins deux comparateurs (30), dont chacun est en communication avec le dispositif photoélectrique (12) pour convertir les signaux de tension analogiques de différentes bandes d'énergie en signaux d'impulsions numériques ;

un module de comptage (40), en communication avec chacun des comparateurs (30) pour recevoir les signaux d'impulsions numériques envoyés par chacun des comparateurs (30) et mesurer les taux de comptage des signaux d'impulsions numériques ;

un capteur de température (70), placé à l'extérieur du dispositif photoélectrique (12) pour mesurer la température ;

un micro-ordinateur monopuce (50), en communication respectivement avec le module de comptage (40) pour recevoir les taux de comptage afin de calculer un rapport entre les taux de comptage de différentes sections d'énergie et avec le capteur de température (70) pour recevoir la température mesurée, et calculer une tension de correction ; et

une source d'alimentation haute tension (60), connectée respectivement au micro-ordinateur monopuce (50) pour recevoir la tension de correction et au dispositif photoélectrique (12) pour effectuer la correction de gain du dispositif photoélectrique (12) en fonction de la tension de correction,

dans lequel, le rapport entre les taux de comptage de différentes sections d'énergie d'un spectre d'énergie mesuré divisé en plusieurs sections d'énergie utilisant n seuils d'énergie différents En est déterminé comme étant le gain $G$ du détecteur à scintillation (10), et est corrélé à la température $t$ et à la tension $x$ du détecteur à scintillation (10) par une équation gain-température-tension $G(x, t) = at + bx + c$, où les paramètres $a$, $b$, $c$ sont des constantes,

dans lequel, le micro-ordinateur monopuce (50) est configuré pour calculer la tension de correction selon les étapes suivantes :

une première étape de détermination de l'équation gain-température-tension d'un détecteur à scintillation standard, comprenant spécifiquement :

sous-étape S1 : mesure d'un gain $G_0$ d'un détecteur à scintillation standard à une température fixe $T_0$ et à une tension fixe $X_0$, et utilisation du gain $G_0$ du détecteur à scintillation standard comme gain cible d'un détecteur à scintillation (10) à mesurer ;

sous-étape S2 : mesure d'un gain $G_2$ du détecteur à scintillation standard à la température fixe $T_0$ et à une tension ajustée $X_2$, substitution du résultat dans l'équation gain-température-tension pour calculer les paramètres $k_2$ et $p_2$, où $k_2 = b$, $p_2 = at_0 + c$ ;

sous-étape S3 : mesure d'un gain $G_1$ du détecteur à scintillation standard à la tension fixe $X_0$ et à une température ajustée $T_1$, substitution du résultat dans l'équation gain-température-tension pour calculer les paramètres $k_1$ et $p_1$, où $k_1 = a$, $p_1 = bx_0 + c$ ;

sous-étape S4 : substitution des paramètres $k_1$, $k_2$, $p_1$ et $p_2$ dans l'équation gain-température-tension pour calculer les paramètres $a$, $b$, $c$, de manière à déterminer l'équation gain-température-tension du détecteur à scintillation étalon, à savoir

$$G(x, t) = at + bx + c,$$

sous-étape S5 : lorsque le gain cible est $G_0$, détermination d'une relation entre la tension $x$ et la température $t$ du détecteur à scintillation (10) selon l'équation gain-température-tension suivante

$$x = (G_0 - at - c) / b ;$$

une deuxième étape consistant à mesurer une différence de gain entre le détecteur à scintillation (10) à mesurer et le détecteur à scintillation standard et à obtenir une équation tension-température, sous condition du gain cible, du détecteur à scintillation (10) à mesurer ;

une troisième étape consistant à utiliser l'équation tension-température obtenue lors de la deuxième étape comme référence de correction, à calculer une tension de correction correspondante en fonction d'une température mesurée du détecteur à scintillation (10) à mesurer.

6. Appareil de correction de gain selon la revendication 5, **caractérisé en ce que** la source radioactive d'étalonnage (20) est une source radioactive à énergie unique.

7. Appareil de correction de gain selon la revendication 6, **caractérisé en ce que** la source radioactive d'étalonnage (20) adopte un élément radioactif de Cs-137, Co-60 ou Eu-152.

8. Appareil de correction de gain selon la revendication 5, **caractérisé en ce que** la source radioactive d'étalonnage (20) et le cristal de scintillation (11) sont configurés pour avoir une distance constante entre eux lorsque le même type de détecteurs à scintillation sont étalonnés.

9. Appareil de correction de gain selon la revendication 5, **caractérisé en ce que** deux comparateurs (30) sont fournis et en communication avec le dispositif photoélectrique (12) et le module de comptage (40).

10. Appareil de correction de gain selon la revendication 5, **caractérisé par le fait que** le dispositif photoélectrique (12) est un photomultiplicateur au silicium.

**FIG. 1**

**FIG. 2**

**FIG. 3**

FIG.4

EP 3 637 147 B1

FIG. 5

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011031405 A

**Non-patent literature cited in the description**

- Silicon Photomultipliers: Characterization and Applications. **MARCO RAMILLI et al.** Photodetectors. In-Tech, 23 March 2012